# EUROPÄISCHE PATENTSCHRIFT

(11) **EP 0 767 114 B1**
(45) Veröffentlichungstag und Bekanntmachung des Hinweises auf die Patenterteilung: **03.04.2002**
(21) Anmeldenummer: 96250209.2
(22) Anmeldetag: 25.09.1996
(51) Int. Cl.: B65G 17/42, B65G 17/12

(54) **Laschenkette**
Plate-link chain
Chaine à maillons plats

(30) Priorität: 04.10.1995 AT 164795
(43) Veröffentlichungstag der Anmeldung: 09.04.1997
(73) Patentinhaber: RUD-KETTENFABRIK RIEGER & DIETZ GMBH U. CO., 73432 Aalen-Unterkochen (DE)
(72) Erfinder: Dalferth, Hans, 73433 Aalen (DE)
(74) Vertreter: Böning, Manfred, Prof.Dr.-Ing.

(56) Entgegenhaltungen:
- EP-A- 0 284 595
- DE-A- 1 805 815
- DE-A- 3 503 302
- DE-A- 4 233 550
- DE-A- 4 233 552
- DE-C- 814 870

## Beschreibung

Die Erfindung betrifft eine Laschenkette für ein Becherwerk mit Anschlußstege aufweisenden Bechern, bei der die Außen- und Innenlaschen durch Kettenbolzen miteinander verbunden sind, deren Enden drehbar in Buchsen gelagert sind, die drehfest mit den Außenlaschen verbunden sind und die zum Verbinden der Kette mit den Anschlußstegen dienen.

Eine Laschenkette der vorstehenden Art ist aus der DE-A-42 33 552 bekannt. Bei der bekannten Laschenkette sind die Innenlaschen ebenfalls drehfest mit einer drehbar auf deren Kettenbolzen gelagerten Buchse verbunden, so daß der Kettenbolzen schwimmend in zwei seitlichen und einer zentralen Buchse gelagert ist. Die geschilderte Anordnung erleichtert die vor Ort durchzuführende Montage der Laschenkette spürbar gegenüber einer anderen aus der DE-A-35 03 302 bekannten Laschenkette, deren Außenlaschen mit Querbohrungen versehen sind, die die Kettenbolzen im Preßsitz umschließen. Während im zuletzt genannten Fall nämlich der Einsatz von Einpreßvorrichtungen auf der Baustelle unumgänglich ist, brauchen die Einzelteile der Laschenkette im zuerst genannten Fall lediglich zusammengesteckt zu werden. Die Kettenbolzen stellen bei beiden bekannten Konstruktionen Träger auf zwei Stützen dar, wobei die Stützen von den Anschlußstegen bzw. den Außenlaschen gebildet werden. Die unter Last auftretende elastische Verformung der Kettenbolzen kann dazu führen, daß es im Bereich der Stirnseiten der die Innenlaschen tragenden Buchsen zu Bildung von Verschleißriefen am Umfang der Kettenbolzen kommt und dies ungeachtet der von der Buchse ausgehenden Stützwirkung für die Kettenbolzen. Es versteht sich,. daß derartige Verschleißriefen nicht nur unerwünscht sind, sondern daß ihr Zustandekommen letztendlich das Ergebnis eines erhöhten Energieaufwandes für den Antrieb des Becherwerkes darstellt.

Der Erfindung liegt die Aufgabe zugrunde, eine Laschenkette der in Betracht gezogenen Gattung so auszugestalten, daß unter Beibehaltung der leichten Montierbarkeit vor Ort unerwünschte Verschleißerscheinungen an den Kettenbolzen vermieden werden. Diese Aufgabe wird erfindungsgemäß auf überraschend einfache Weise dadurch gelöst, daß die Innenlaschen drehfest mit den Kettenbolzen verbunden sind.

Die erfindungsgemäße Laschenkette vereint in sich die Vorteile großer Einfachheit und leichter Montierbarkeit. Sie besteht aus von jeweils zwei Innenlaschen und zwei Kettenbolzen gebildeten Baugruppen und auf die Enden der Kettenbolzen steckbaren mit Buchsen versehenen Außenlaschen. Da Reibungsverluste zwischen den Innenlaschen und den Kettenbolzen entfallen, wird der zum Antrieb des Becherwerkes erforderliche Energiebedarf reduziert. Ein Austausch einzelner Außenlaschen oder Baugruppen ist problemlos möglich.

Als besonders vorteilhaft erweist es sich, wenn der Außendurchmesser des mit den Innenlaschen verbundenen Abschnittes des Kettenbolzens gleich dem Außendurchmesser der mit den Außenlaschen verbundenen Buchsen ist. In einem solchen Fall ist es möglich, die Außen- und Innenlaschen identisch auszubilden.

Weitere Einzelheiten und Merkmale der Erfindung ergeben sich aus den Unteransprüchen und der nachstehenden Beschreibung einer bevorzugten Ausführungsform der Erfindung.

Es zeigen:
Fig. 1 teilweise im Schnitt einen mit dem Rücken von Bechern verbundenen Abschnitt einer Laschenkette,
Fig. 2 in vergrößertem Maßstab eine Einzelheit der in Fig. 1 dargestellten Laschenkette und
Fig. 3 eine Teilseitenansicht der Laschenkette gemäß Fig. 1 und 2.

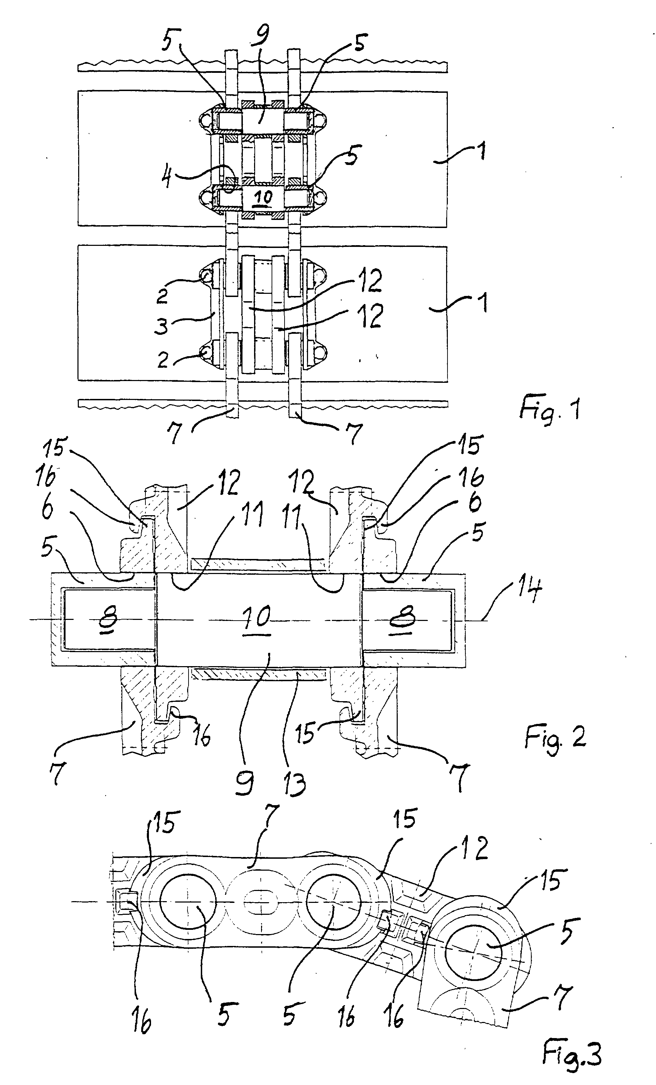

In Fig. 1 sind mit 1 zwei aufeinanderfolgende Becher eines Laschenketten-Becherwerkes bezeichnet. Die Becher 1 sind mittels durch Schrauben 2 an ihrer Rückwand befestigter winkelförmiger Anschlußstege 3 mit der sie antreibenden Laschenkette verbunden. Jeder der Anschlußstege 3 weist zwei im der Kettenteilung entsprechenden Abstand voneinander angeordnete Bohrungen 4 auf, in denen mit Spiel kappenförmig ausgebildete Buchsen 5 gelagert sind, die in die Augen 6 der Außenlaschen 7 der Laschenkette eingepreßt sind und in die die abgesetzten Enden 8 der Kettenbolzen 9 ragen. Auf den jeweils zwischen den Enden 8 gelegenen Abschnitt 10 der Kettenbolzen 9 sind im Abstand voneinander die mit Bohrungen 11 versehenen Innenlaschen 12 gepreßt, wobei jeweils zwei Innenlaschen 12, zwei Kettenbolzen 9 und zwei den Lauf über Kettenräder vorteilhaft beeinflussende Hülsen 13 eine vorgefertigte rahmenartige, stabile Baugruppe bilden.

Um Relativbewegungen der Außenlaschen 7 gegenüber den Innenlaschen 12 in Richtung der Längsachse 14 der Kettenbolzen 9 zu verhindern, sind die Enden der Außen- und Innenlaschen nach Art eines Bajonettverschlusses miteinander verbunden. Sie weisen zu diesem Zweck zwei Kupplungselemente 15 und 16 auf, von denen eines als sichelförmige Kurvenscheibe und eines als eine diese Kurvenscheibe in den möglichen Betriebsstellungen aufeinanderfolgender Laschen 7,12 übergreifender hakenförmiger Vorsprung ausgebildet ist. Aufgrund der gewählten Form der Kupplungselemente 15,16 lassen sich die Außenlaschen 7, wie im rechten Teil der Fig. 3 gezeigt, mit ihren Buchsen 5 auf die Kettenbolzen 9 schieben und anschließend in eine Verriegelungsposition schwenken.

## Patentansprüche

1. Laschenkette für ein Becherwerk mit Anschlußstege aufweisenden Bechern, bei der die Außen- und Innenlaschen durch Kettenbolzen miteinander verbunden sind, deren Enden drehbar in Buchsen gelagert sind, die drehfest mit den Außenlaschen verbunden sind und die zum Verbinden der Kette mit den Anschlußstegen dienen, **dadurch gekennzeichnet, daß** die Innenlaschen (12) drehfest mit den Kettenbolzen (9) verbunden sind.

2. Laschenkette nach Anspruch 1, **dadurch gekennzeichnet, daß** die Kettenbolzen (9) in Bohrungen (11) der Innenlaschen (12) eingepreßt sind.

3. Laschenkette nach Anspruch 1 oder 2, **dadurch gekennzeichnet, daß** auf dem zwischen den Innenlaschen (12) gelegenen Teil des Kettenbolzens (9) drehbar eine Hülse (13) gelagert ist.

4. Laschenkette nach einem oder mehreren der Ansprüche 1 bis 3, **dadurch gekennzeichnet, daß** der Außendurchmesser des mit den Innenlaschen (12) verbundenen Abschnittes (10) des Kettenbolzens (9) gleich dem Außendurchmesser der mit den Außenlaschen (7) verbundenen Buchsen (5) ist.

5. Laschenkette nach Anspruch 4, **dadurch gekennzeichnet, daß** die Außen- und Innenlaschen (7,12) identisch ausgebildet sind.

6. Laschenkette nach einem oder mehreren der Ansprüche 1 bis 5, **dadurch gekennzeichnet, daß** die jeweils aufeinanderfolgenden Außen- und Innenlaschen (7,12) gegen Relativbewegungen in Richtung der Längsachse (14) der Kettenbolzen (9) durch nach Art eines Bajonettverschlusses in Eingriff bringbare Kupplungselemente (15,16) gesichert sind.

7. Laschenkette nach einem oder mehreren der Ansprüche 1 bis 6, **dadurch gekennzeichnet, daß** die in die Außenlaschen (7) eingepreßten Buchsen (5) kappenförmig ausgebildet sind.

## Claims

1. A plate link chain for a bucket conveyor with buckets which have connection webs, in which chain the outer and inner links are connected to one another by chain pins whose ends are mounted rotatably in bushings which are connected in a rotationally fixed manner to the outer links and serve to connect the chain to the connection webs, **characterized therein** that the inner links (12) are connected in a rotationally fixed manner to the chain pins (9).

2. The plate link chain as claimed in claim 1, **characterized therein** that the chain pins (9) are pressed into bores (11) of the inner links (12).

3. The plate link chain as claimed in claim 1 or 2, **characterized therein** that a sleeve (13) is mounted rotatably on that part of the chain pin (9) which is located between the inner links (12).

4. The plate link chain as claimed in one or more of claims 1 to 3, **characterized therein** that the extemal diameter of the section (10) of the chain pin (9) which is connected to the inner links (12) is equal to the external diameter of the bushings (5) connected to the outer links (7).

5. The plate link chain as claimed in claim 4, **characterized therein** that the outer and inner links (7, 12) are of identical design.

6. The plate link chain as claimed in one or more of claims 1 to 5, **characterized therein** that the respectively successive outer and inner links (7, 12) are secured against relative movements in the direction of the longitudinal axis (14) of the chain pins (9) by coupling elements (15, 16) which can be brought into engagement in the manner of a bayonet closure.

7. The plate link chain as claimed in one or more of claims 1 to 6, **characterized therein** that the bushings (5) pressed into the outer links (7) are designed in the form of caps.

## Revendications

1. Chaîne à maillons plats destinée à un transporteur à godets comprenant des godets présentant des étançons de raccordement, où les maillons extérieurs et intérieurs sont reliés les uns aux autres à l'aide de tourillons de chaîne dont les extrémités sont logées dans des coussinets reliés sans torsion aux maillons extérieurs et servant à relier la chaîne aux étançons de raccordement, **caractérisée en ce que** les maillons intérieurs (12) sont reliés aux tourillons de chaîne (9) sans torsion.

2. Chaîne à maillons plats selon la revendication 1, **caractérisée en ce que** les tourillons de chaîne (9) sont pressés dans des alésages (11) des maillons intérieurs (12).

3. Chaîne à maillons plats selon la revendication 1 ou 2, **caractérisée en ce qu'**une douille (13) est logée en rotation sur la partie du tourillon de chaîne (9) située entre les maillons intérieurs (12).

4. Chaîne à maillons plats selon l'une ou plusieurs des revendications 1 à 3, **caractérisée en ce que** le diamètre extérieur de la section (10) des tourillons de chaîne (9) reliée aux maillons intérieurs (12) est égal au diamètre extérieur des coussinets (5) reliés aux maillons extérieurs (7).

5. Chaîne à maillons plats selon la revendication 4, **caractérisée en ce que** les maillons extérieurs et intérieurs (7, 12) présentent une configuration identique.

6. Chaîne à maillons plats selon l'une ou plusieurs des revendications 1 à 5, **caractérisée en ce que** les maillons extérieurs et intérieurs (7, 12) respectivement successifs sont arrêtés contre les mouvements relatifs dans le sens de l'axe longitudinal (14) des tourillons de chaîne (9) à l'aide d'éléments de couplage (15, 16) à emboîtement à baïonnette.

7. Chaîne à maillons plats selon l'une ou plusieurs des revendications 1 à 6, **caractérisée en ce que** les coussinets (5) pressés dans les maillons extérieurs (7) présentent une configuration de capuchon.
